Europäisches Patentamt

European Patent Office

Office européen des brevets

(19)

(11) **EP 1 101 085 B1**

(12) **EUROPÄISCHE PATENTSCHRIFT**

(45) Veröffentlichungstag und Bekanntmachung des Hinweises auf die Patenterteilung:
**09.10.2002 Patentblatt 2002/41**

(21) Anmeldenummer: **99944300.5**

(22) Anmeldetag: **28.07.1999**

(51) Int Cl.$^7$: **G01J 5/00**

(86) Internationale Anmeldenummer:
**PCT/EP99/05396**

(87) Internationale Veröffentlichungsnummer:
**WO 00/006981 (10.02.2000 Gazette 2000/06)**

(54) **VERFAHREN UND VORRICHTUNG ZUM KALIBRIEREN VON EMISSIVITÄTSUNABHÄNGIGEN TEMPERATURMESSUNGEN**

METHOD AND DEVICE FOR CALIBRATING MEASUREMENTS OF TEMPERATURES INDEPENDENT OF EMISSIVITY

PROCEDE ET DISPOSITIF DE CALIBRAGE DE MESURES DE TEMPERATURES INDEPENDANTES DE L'EMISSIVITE

(84) Benannte Vertragsstaaten:
**DE FR GB IT**

(30) Priorität: **28.07.1998 DE 19833961**
**21.07.1999 DE 19934299**

(43) Veröffentlichungstag der Anmeldung:
**23.05.2001 Patentblatt 2001/21**

(73) Patentinhaber: **STEAG RTP Systems GmbH**
**89160 Dornstadt (DE)**

(72) Erfinder:
• **LERCH, Wilfried**
**D-89160 Dornstadt (DE)**

• **HAUF, Markus**
**D-89335 Ichenhausen (DE)**

(74) Vertreter: **Geyer, Ulrich F., Dr. Dipl.-Phys. et al**
**WAGNER & GEYER,**
**Patentanwälte,**
**Gewürzmühlstrasse 5**
**80538 München (DE)**

(56) Entgegenhaltungen:
**EP-A- 0 539 984       US-A- 5 265 957**
**US-A- 5 553 939       US-A- 5 624 590**

**Beschreibung**

Die Erfindung betrifft ein Verfahren und eine Vorrichtung zum Kalibrieren von Temperaturmessungen, die mit wenigstens einem ersten Strahlungsdetektcr zum Messen einer von wenigstens einem Substrat abgegebenen Wärmestrahlung vorgenommen werden.

Verfahren und Vorrichtungen dieser Art sind beispielsweise im Zusammenhang mit der Fertigung von Halbleitersubstraten in einer Reaktionskammer bekannt. Dort werden emissivitätsunabhängige Verfahren bevorzugt, bei denen eine von einem Substrat kommende Wärmestrahlung im wesentlichen unabhängig von der jeweiligen Emissivität eines Substrats mit der tatsächlichen Temperatur des Substrats in Beziehung gesetzt wird. Ein derartiges Verfahren kompensiert Emissivitätsdifferenzen zwischen unterschiedlichen Substraten. Zum Erreichen eines emissivitätsunabhängigen Meßverfahren werden beispielsweise die sogenannte "Ripple-Technik", die beispielsweise in der US-A-5 490 728 sowie der nicht vorveröffentlichten DE 197 54 386 A derselben Anmelderin beschrieben ist, sowie das Cavity-Prinzip verwendet, bei dem beispielsweise eine verspiegelte Kammer von einem zu messenden Gegenstand auf einer Seite abgeschlossen ist, wodurch eine Annäherung an einen Hohlraumstrahler mit Emissivität 1 erreicht wird. Ein weiteres Verfahren, welches das Cavity-Prinzip verwendet, ist beispielsweise in der nicht vorveröffentlichten DE 197 37 802 derselben Anmelderin beschrieben. Bei den bekannten Verfahren werden Wafer verwendet, auf deren Ober- oder Unterseite ein Thermoelement (TC-ThermoCouple) aufgeklebt ist. Die Meßabweichung von TC zu TC ist dabei erfahrungsgemäß sehr klein, so lange die TCs aus Drahtpaaren gleicher Serie gefertigt wurden. Die Streuungen liegen dann in einem Bereich von circa 1 bis 2 °K. Aufgrund dieser geringen Streuungen können die Temperaturmessungen auf Emissivitätsunabhängigkeit eingestellt werden, da es hierbei insbesondere auf eine geringe Streuung zwischen den TC's ankommt. Die Meßunsicherheit des absoluten Temperaturwertes ist jedoch bedeutend höher, wobei die Meßunsicherheiten bestenfalls in dem Bereich von 2-3K liegen, und in weniger guten Fällen bei über 10K-20K liegen.

Diese Meßunsicherheiten ergeben sich durch unterschiedliche Faktoren. Unter anderem hängt die Thermospannung des Thermopaares neben der Temperatur auch von der Legierung ab, die aber fertigungsbedingt gewissen Streuungen unterliegt. Ferner sind zwischen dem TC und dessen Verstärker mehrere elektrische Verbindungen vorgesehen, die jeweils gleichzeitig Thermopaare bilden, so daß unsymmetrische Übergänge eine zusätzliche Thermospannung erzeugen. Darüber hinaus besitzen die Klebestellen der TCs einen anderen Absorptionsgrad als die die Klebestellen umgebende Waferoberfläche. Die Gleichgewichtstemperatur der TCs stellt sich also nicht nur mittels Wärmeleitung zwischen Wafer und TC ein, was ideal wäre, vielmehr wird die Temperatur des TC zusätzlich durch die Heizstrahlung der Lampe beeinflußt, weshalb die Temperatur der TCs oft nicht exakt der Temperatur des Substrats entspricht.

Die Meßunsicherheiten entstehen also in erster Linie durch Fehlerquellen, die sich bei allen TCs in gleicher Weise als Meßfehler niederschlagen. TCs sind daher Meßaufnehmer, die zwar eine geringe Streuung, aber eine große absolute Meßungenauigkeit aufweisen.

Zum Erreichen einer besseren Meßgenauigkeit wurden die TCs in einem TC-Kalibrator, d.h. einem Ofen mit sehr homogener Temperaturverteilung im Inneren bezüglich einer Absoluttemperaturmessung kalibriert. Mehrere unkalibrierte TCs wurden zusammen mit einem Referenz-TC in den Ofen eingebracht, wobei das Referenz-TC seinerseits bei einem separaten Kalibrierdienst mit Hilfe eines Transferpyrometers bezüglich einer Primärreferenz kalibriert wurde. Diese mehrfachen Kalibrierungen erfordern unterschiedliche Vorrichtungen, sie sind sehr aufwendig, und aufgrund der vielen Schritte ergeben sich zahlreiche Möglichkeiten, daß Fehler in die Kalibrierung eingeführt werden, wodurch sich wiederum Meßunsicherheiten am Ende ergeben.

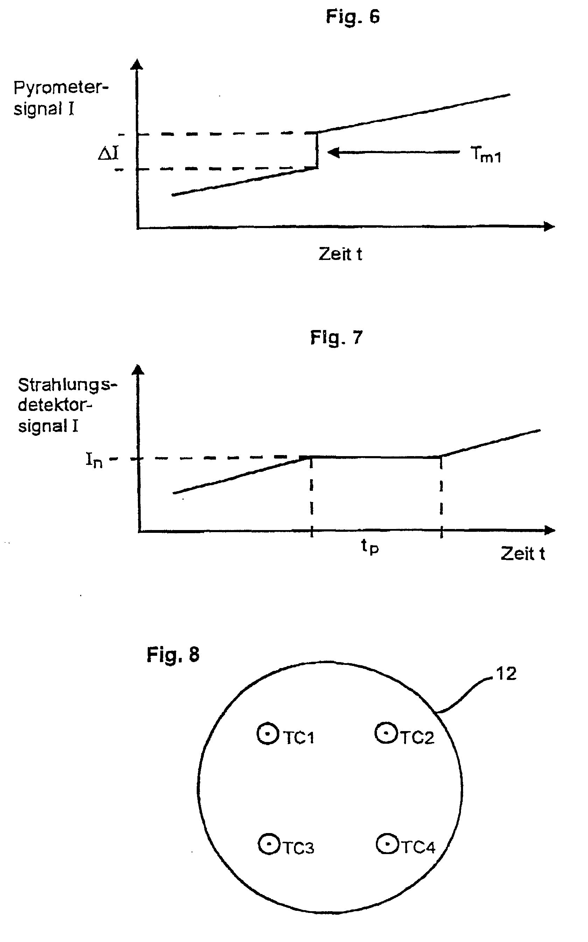

Aus der US 5,265,957 ist ferner eine Vorrichtung und ein Verfahren zum Kalibrieren eines Temperatursensors gezeigt, bei dem ein Wafer mit einer Vielzahl von Kalibrierinseln eines Referenzmaterials mit einem Schmelzpunkt in dem Bereich von 150°C bis 550°C versehen wird. Während einer Erwärmung eines derartigen Wafers wird die effektive Reflektivität des Wafers durch den Temperatursensor gemessen, und eine erste sprungartige Veränderung eines Ausgangssignals des Temperatursensors wird mit einer Wafertemperatur gleichgesetzt, welche dem Schmelzpunkt des Referenzmaterials entspricht. Anschließend werden Temperatursensor-Kalibrierparameter berechnet. Das Prinzip ist in Fig. 6 verdeutlicht. Das Signal I eines Temperatursensors (Pyormeters) wird dabei als Funktion der Zeit t während der Erwärmung des Wafers aufgenommen. Damit sich die Reflektivität des Wafers am Phasenübergang des Referenzmaterials ändert, muß das Referenzmaterial oberflächennah angeordnet werden, so daß dieses im Bereich der Eindringtiefe der Meßwellenlänge ist. Am Phasenübergang des Referenzmaterials tritt, wie in Fig. 6 dargestellt, die erwähnte sprunghafte Veränderung des Pyrometersignals auf. Das in US 5,265,957 dargestellte Verfahren weist erhebliche Nachteile auf. So läßt sich beispielsweise der Schmelztemperatur $T_{m1}$ aufgrund der sprunghaften Änderung des Pyrometersignal kein eindeutiger Pyrometerwert zuordnen, wodurch sich ein systematischer Meßfehler $\Delta I$ für das Kalibrierverfahren ergibt.

Der Erfindung liegt daher die Aufgabe zugrunde, ein Verfahren und eine Vorrichtung der Eingangs genannten Art zu schaffen, bei dem bzw. bei der die Kalibrierung von Temperaturmessungen auf einfache und kostengünstige Weise mit größerer Genauigkeit durchgeführt werden kann.

Die gestellte Aufgabe wird erfindungsgemäß durch ein Verfahren der Eingangs genannten Art gelöst, das die folgenden Verfahrensschritte aufweist: Erwärmen eines wenigstens ein Referenzmaterial mit bekannter Schmelzpunkttemperatur tragenden Referenzsubstrat auf/oder über die Schmelzpunkttemperatur; Messen der Wärmestrahlung des Referenzsubstrats während der Erwärmung und/oder einer der Erwärmung folgenden Abkühlung; In-Beziehung-Setzen eines während des Meßvorgangs auftretenden Meßwertplateaus mit der bekannten Schmelzpunkttemperatur.

Durch Erwärmung des auf dem Referenzsubstrat befindlichen Referenzmaterial steigt die Temperatur des Referenzsubstrats sowie des Referenzmaterials an, bis sie die Schmelzpunkttemperatur des Referenzmaterials erreicht. An der Schmelzpunkttemperatur angelangt, steigt die Temperatur nicht weiter an, bis das Referenzmaterial komplett von der festen in die flüssige Phase übergegangen ist, bis also dem Referenzmaterial die latente Wärme zugeführt worden ist. Beim Abkühlen kehrt sich dieser Vorgang in bekannter Weise um. Da die Schmelzpunkttemperatur des Referenzmaterials genau bekannt ist, kann ein während der Erwärmung und/oder einer der Erwärmung folgende Abkühlung gemessenes Meßwertplateau daher mit der bekannten Schmelzpunkttemperatur in Beziehung gesetzt werden, wodurch eine einfache Kalibrierung einer Absoluttemperaturmessung erreicht wird.

Vorteilhafterweise wird das Meßwertplateau während der Erwärmung und/oder der Abkühlung des Referenzsubstrats ermittelt. Bevorzugt wird aber die Ermittlung des Meßwertplateaus während der Abkühlung vorgenommen, da das Referenzmaterial im geschmolzenen Zustand vor der vollständigen Erstarrung in besonders gutem Wärmeleitkontakt zu dem Referenzsubstrat steht.

Das erfindungsgemäße Verfahren weist im Vergleich zu dem oben beschriebenen Verfahren der US 5,265,957 erhebliche Vorteile auf. Da das Verfahren nicht von Änderungen der Emissivität des Referenzsubstrats abhängig ist, ist es möglich, das Referenzmaterial mit einer dicken Schutzschicht zu umgeben, bzw. das Referenzmaterial im Inneren des Referenzsubstrats anzuordnen. Auf eine Anordnung in der Nähe der Oberfläche kann verzichtet werden. Dies hat den Vorteil, daß Kontaminationen der Prozeßkammer durch das Referenzmaterial vermieden werden. Dies ist jedoch die Grundvoraussetzung für eine breite Anwendung des Referenzsubstrats in der Halbleitertechnologie.

Ein weiterer Vorteil ergibt sich aus dem Auftreten eines Meßwertplateaus bei der bekannten Schmelztemperatur, wie dies in Fig. 7 schematisch dargestellt ist. Im Gegensatz zu dem in der US 5,265,957 beschriebenen Verfahren ist beim erfindungsgemäßen Verfahren aufgrund des Plateaus eine eindeutige Zuordnung eines Strahlungsdetektorsignals zu einer Schmelzpunkttemperatur möglich. Der oben erwähnte systematische Fehler $\Delta I$ ist beim erfindungsgemäßen Verfahren minimiert.

Die Ausbildung eines Plateaus hat ferner den Vorteil, daß sich während der Zeit $t_p$ ein thermischer Gleichgewichtszustand zwischen dem Referenzmaterial und dem Referenzsubstrat ausbildet, wodurch mögliche Temperaturunterschiede minimiert werden. Weiterhin ist vorteilhaft, daß sich beim erfindungsgemäßen Verfahren optische Eigenschaften der Oberfläche des Referenzsubstrats nicht ändern. Wird beispielsweise das Referenzsubstrat (mit Ausnahme des sich im Inneren befindlichen Referenzmaterials) aus dem gleichen Material gewählt, wie die später zu prozessierenden Substrate (z. B. Si), so weist das Referenzsubstrat dieselbe Emissivität auf wie diese Substrate. Dadurch läßt sich die Kalibrierung des Strahlungsdetektors sogar ohne Emissivitätskompensation direkt beim Prozessieren von Substraten einsetzen. Lediglich wenn die Substrate z. B. aufgrund anderer Oberflächenbeschaffenheit eine andere (spektrale) Emissivität aufweisen, ist eine Emissivitätskompensation oder korrektur durchzuführen, wie dies weiter unten dargestellt ist. Ist ein Prozessieren der Substrate ohne Emissivitätskompensation möglich, so hat dies ferner den Vorteil, daß nur ein Strahlungsdetektor für die Temperaturmessung erforderlich ist. Ein derartiges Temperaturmeßverfahren mit nur einem Strahlungsdetektor ist mit dem in der US 5,265,957 beschriebenen Verfahren nicht möglich, da sich bei diesem Verfahren die Emissivität der Oberfläche des Referenzsubstrats am Phasenübergang ändert.

Damit das Plateau meßtechnisch gut erfaßbar ist, sollte die Masse des Referenzmaterials wenigstens 1% der Gesamtmasse des Referenzsubstrats betragen. Dieses geringe Massenverhältnis kann gewählt werden, da die spezifische Schmelzwärme ein Vielfaches der spezifischen Wärmekapazität beträgt. Damit sich die optischen Eigenschaften der Oberfläche des Referenzsubstrats nicht ändern, wird die Schutzschicht des Referenzmaterials bevorzugt wenigstens gleich der dreifachen optischen Abschwächlänge, die die Schutzschicht für die Meßwellenlänge des Strahlungsdetektors aufweist, gewählt.

Um eine emissivitätsunabhängigen Temperaturmessung zu erreichen, erfolgt die Erwärmung des Referenzsubstrats gemäß einer besonders bevorzugten Ausführungsform der Erfindung mit wenigstens einer Strahlungsheizquelle, deren abgegebene Strahlung mit wenigstens einem charakteristischem Parameter moduliert, vorteilhafterweise aktiv moduliert wird, wobei die von der wenigstens einen Strahlungsheizquelle abgegebene Strahlung mit wenigstens einem zweiten Strahlungsdetektor ermittelt wird, und wobei die von dem ersten Strahlungsdetektor ermittelte Strahlung zum Kompensieren der von dem Referenzsubstrat reflektierten Strahlung der Strahlungsquelle durch die von dem zweiten Strahlungsdetektor ermittelte Strahlung korrigiert wird.

Aufgrund der charakteristischen bekannten Modulation der Strahlungsquelle ist es möglich, zwischen der von dem Gegenstand selbst abgestrahlten Strahlung, die für die Ermittlung der Temperatur des Referenzsubstrats erforderlich ist, und der reflektierten Strahlung der Strahlungsquelle zu unterscheiden. Für weitere Vorteile und Einzelheiten bezüglich der als Ripple-Technik bekannten Modulation und Auswertung der Strahlung der Strahlungsquelle wird auf die US-A-5 490 728, sowie die nicht vorveröffentlichte DE 197 54 386 A derselben Anmelderin Bezug genommen.

Auf diese Weise ist es möglich, unabhängig von der Kenntnis der Emissivität des Referenzsubstrats eine Kalibrierung bezüglich der Absoluttemperatur zu erreichen. Um das Meßsystem auf eine Unabhängigkeit bezüglich der Emissivität einzustellen kann es mit Hilfe von TC-Wafern vorkalibriert werden, da es hierbei primär auf eine geringe Streuung zwischen den TCs ankommt.

Vorteilhafterweise wird die Modulation zur Charakterisierung der von der Strahlungsquelle abgegebenen Strahlung bei der Korrektur der vom ersten Strahlungsdetektor ermittelten Strahlung herangezogen, wodurch eine Unterscheidung der Strahlung von der eigentlich zu messenden Strahlung, die vom Referenzsubstrat selbst abgegeben wird, besonders einfach, zuverlässig und quantitativ genau ermöglicht wird.

Die von der Strahlungsquelle abgegebene Strahlung wird vorzugsweise amplituden- frequenz- und/ oder phasenmoduliert. Je nach den vorhandenen Gegebenheiten und Erfordernissen ist die Wahl der Modulationsart wählbar, wobei die Modulationsart insbesondere auch im Hinblick auf die Einfachheit und Zuverlässigkeit des Modulationsverfahrens aber auch des Auswerteverfahrens und des Detektierverfahrens auswählbar ist.

Gemäß einer bevorzugten Ausführungsform der Erfindung besteht die Strahlungsheizquelle aus mehreren Lampen, wobei wenigstens die Strahlung von einer der Lampen moduliert ist, vorteilhafterweise aber die Strahlung von allen Lampen moduliert ist.

Vorteilhafterweise wird der Modulationsgrad oder die Modulationstiefe gesteuert, wodurch er bzw. sie bekannt ist, und die Detektion und Auswertung vereinfacht wird.

Die Emissivitätsunabhängigkeit der Temperaturmessung kann vorteilhafterweise auch dadurch erreicht werden, daß die Messung der vom Substrat abgegebenen Wärmestrahlung auf einer Seite des Substrats erfolgt, die wenigstens einen Teilbereich eines Hohlraumstrahlers bildet.

Gemäß einer weiteren bevorzugten Ausführungsform der Erfindung sind mehrere Referenzmaterialien mit jeweils unterschiedlichen Schmelzpunkttemperaturen auf dem Referenzsubstrat vorgesehen, und es werden während der Erwärmung und/oder Abkühlung die jeweiligen Meßwertplateaus ermittelt, und jeweils mit einer der bekannten Schmelzpunkttemperaturen in Beziehung gesetzt.

Die vorliegende Erfindung ist mit großem Vorteil zur Kalibrierung einer Temperaturmessung im Zusammenhang mit einer Vorrichtung zur thermischen Behandlung von Substraten in einem Ofen, in dem die Substrate schnell und mit einem möglichst genauen, vorgegebenen Temperaturverlauf aufgeheizt und abgekühlt werden, anwendbar.

Die gestellte Aufgabe wird erfindungsgemäß auch durch eine Vorrichtung zum Kalibrieren von Temperaturmessungen der Eingangs genannten Art gelöst, die folgendes aufweist: ein Referenzmaterial mit bekannter Schmelzpunkttemperatur, das an einem Referenzsubstrat angebracht ist, eine Strahlungsquelle zum Erwärmen des Referenzsubstrats, dessen abgegebene Strahlung mittels einer Modulationseinrichtung vorzugsweise aktiv mit wenigstens einem charakteristischen Parameter modulierbar ist, sowie wenigstens einen zweiten Strahlungsdetektor, zur Messung der von der wenigstens einen Strahlungsquelle abgegebenen Strahlung, und eine Einrichtung zum Korrigieren der vom ersten Strahlungsdetektor ermittelten Strahlung, zur Kompensation der vom Referenzsubstrat reflektierten Strahlung der Strahlungsquelle durch die vom zweiten Strahlungsdetektor ermittelte Strahlung.

Durch die Verwendung eines Referenzsubstrats mit einem darauf angebrachten Referenzmaterial mit bekannter Schmelzpunkttemperatur in Kombination mit der aktiven Modulation ergeben sich wiederum die oben genannten Vorteile einer emissivitätsunabhängigen einfachen Kalibrierung einer Temperaturmessung.

Gemäß einer Ausführungsform der Erfindung weist die Vorrichtung einen Hohlraumstrahler auf, der zumindest teilweise durch das Substrat gebildet ist.

Vorzugsweise wird der Hohlraumstrahler durch eine verspiegelte Kammer gebildet, deren eine Wand zumindest teilweise durch das Substrat gebildet wird. Vorteilhafterweise kann der Hohlraumstrahler auch durch eine Platte gebildet werden, die parallel zu dem Substrat angeordnet ist.

Gemäß einem bevorzugten Ausführungsbeispiel ist an dem Referenzsubstrat eine Abdeckung vorgesehen, die zwischen sich und dem Referenzsubstrat eine Kammer zur Aufnahme des Referenzmaterials vorsieht. Vorzugsweise ist die Kammer gegenüber der Umgebung abgedichtet um zu verhindern, daß das Referenzmaterial die zu kalibrierende Vorrichtung verunreinigt. Um einen gleichmäßigen Druck (Partialdruck des Referenzmaterials) in der Kammer zu gewährleisten, ist diese vorteilhafterweise evakuiert, was auch den Vorteil mit sich bringt, daß kein flüssiges Referenzmaterial unter dem Druck eines erhitzten Restgases durch eventuell vorhandene Mikrorisse nach außen gedrückt wird. Vorteilhafterweise ist das ganze Referenzsubstrat verglast.

Vorteilhafterweise weist das Referenzsubstrat wenigstens eine Vertiefung zur Aufnahme des wenigstens einen Referenzmaterials auf, wodurch der Boden des Referenzsubstrats im Bereich des Referenzmaterials möglichst dünn ist, um eine Temperaturdifferenz zwischen der Unterseite des Referenzsubstrats und dem Referenzmaterial möglichst gering zu halten. Aus Stabilitätsgründen werden mehrere Ausnehmungen bevorzugt. Um mechanische Spannungen aufgrund unterschiedlicher Ausdehnungskoeffizienten zwischen dem Referenzsubstrat und dem Referenzmaterial zu vermeiden sind die Wände der Ausnehmungen vorzugsweise abgeschrägt.

Vorteilhafterweise besitzt das Referenzsubstrat die gleiche Größe und/oder Form und/oder das gleiche Gewicht, wie das Substrat, dessen Temperatur nach der Kalibrierung gemessen werden soll, um das Referenzsubstrat mit einem vorhandenen Handlingsystem für das zu messende Substrat zu handhaben. Auf diese Weise kann eine Kalibrierung oder eine zeitweise Nachkalibrierung automatisiert werden. Der Vorteil gegenüber den herkömmlichen TC-Substraten liegt hierbei nicht nur in der Erhöhung der Genauigkeit und Reproduzierbarkeit, sondern auch darin, daß ein TC-Substrat aufgrund der Anschlußdrähte nicht automatisch gehandelt werden kann und die Drähte nach dem Einbau des TC-Substrats angeklemmt werden müssen. Dieser Umstand fällt bei dem beschriebenen Referenzsubstrat weg.

Vorteilhafterweise ist das wenigstens eine Referenzmaterial ein Metall, da für Metalle, insbesondere hoch reine Metalle, die Schmelzpunkttemperaturen sehr genau bekannt bzw. definiert sind.

Gemäß einer weiteren Ausführungsform der Erfindung sind unterschiedliche Referenzmaterialien mit unterschiedlichen Schmelzpunkttemperaturen auf dem Referenzsubstrat vorgesehen, um eine Kalibrierung bei unterschiedlichen Temperaturen zu gewährleisten.

Vorteilhafterweise ist wenigstens ein Referenzmaterial an unterschiedlichen Stellen auf dem Referenzsubstrat angeordnet, wodurch sichergestellt werden kann, daß das Referenzmaterial das Blickfeld des ersten Strahlungsdetektors abdeckt.

Vorteilhafterweise trägt das Referenzsubstrat, das wenigstens eine Referenzmaterial auf einer dem Bestrahlungsdetektor abgewandten Seite. Um eine hohe Emissivität des Referenzsubstrats zu erreichen, sind vorteilhafterweise auf einer dem Strahlungsdetektor zugewandten Seite des Referenzsubstrats Strukturen, wie zum Beispiel Mikrokanäle, vorgesehen.

Um Primärreferenzen mit unterschiedlichen Emissivitäten zu erhalten ist eine Vielzahl von Referenzsubstraten mit unterschiedlichen optischen Schichten vorgesehen. Durch vorsehen von Primärreferenzen mit unterschiedlichen Emissivitäten ergibt sich die Möglichkeit auf eine aufwendige Vorkalibrierung mit TC-Wafern vollständig zu verzichten.

Aufgrund der relativ leichten Herstellung und der thermischen Eigenschaften von keramischen Material ist der Referenzwafer vorzugsweise aus demselben hergestellt.

Die vorliegende Vorrichtung ist mit großem Vorteil zur Kalibrierung einer Vorrichtung zur schnellen thermischen Behandlung von Substraten mit einem Ofen, in dem die Substrate schnell und mit einem möglichst genauen, vorgegebenen Temperaturverlauf aufgeheizt und abgekühlt werden, geeignet.

Die Erfindung wird nachstehend im Zusammenhang mit dem Beispiel einer Vorrichtung zum Aufheizen von Halbleiterwafern unter Bezugnahme auf die Figuren erläutert. Es zeigen:

Fig. 1     einen Längsschnitt durch eine Schnellheizanlage zur Behandlung von Halbleiterwafern in schematischer Darstellung,

Fig. 2     einen Querschnitt entlang der in Fig. 1 eingezeichneten Schnittlinie II-II,

Fig. 3     eine Draufsicht auf ein erfindungsgemäßes Referenzsubstrat, wobei zur Verdeutlichung eine Abdeckung weggelassen wurde,

Fig. 4     eine Schnittansicht des erfindungsgemäßen Referenzsubstrats mit Abdeckung,

Fig. 5     eine vergrößerte Teilschnittansicht des Referenzsubstrats,

Fig. 6     eine Temperatur-Zeit-Kurve für ein Referenzsubstrat nach dem Stand der Technik,

Fig. 7     eine Temperatur-Zeit-Kurve für das erfindungsgemäße Referenzsubstrat;

Fig. 8     ein mit Thermoelementen bestücktes Referenzsubstrat.

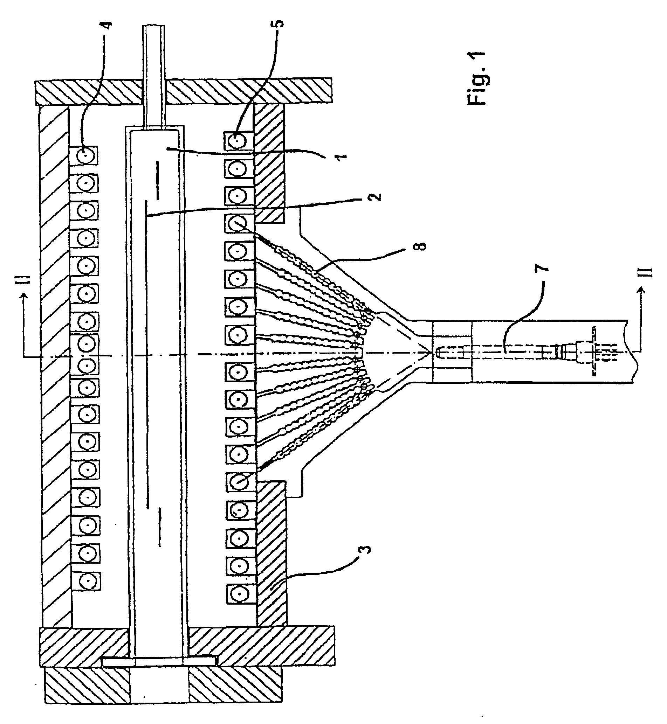

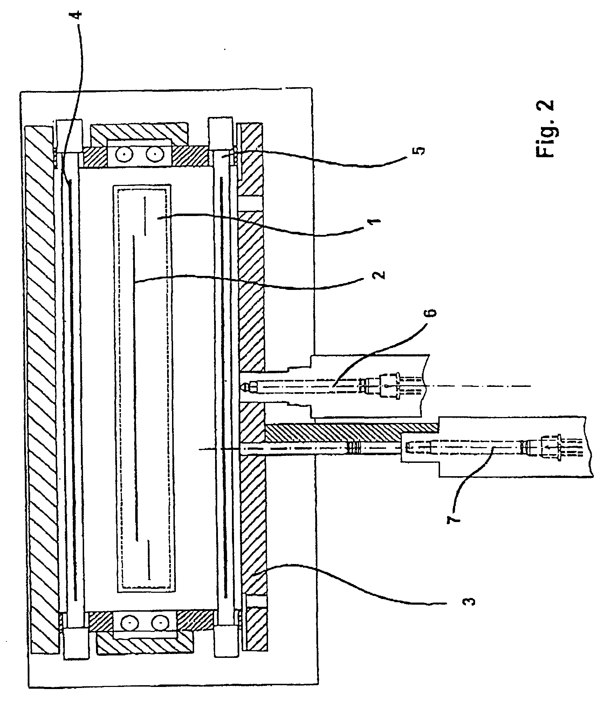

Die in Fig. 1 und 2 dargestellte Ausführungsform eines Schnellheizofens zur Behandlung von Halbleiterwafern 2 zeigt eine vorzugsweise aus Quarzglas bestehende Reaktionskammer 1 mit einem darin befindlichen Halbleiterwafer 2. Die Reaktionskammer 1 ist von einem Gehäuse 3 umgeben, daß jeweils oben und unten Lampen 4, 5 aufweist, deren Strahlung auf die Reaktionskammer 1 gerichtet ist. Ein schematisch dargestelltes Pyrometer 6 (vgl. insbesondere Fig. 2) mit einem großen Eintrittswinkel mißt die vom Halbleiterwafer 2 emittierte Strahlung, sowie die am Halbleiter 2 reflektierte Strahlung der Lampen 5, die im dargestellten Ausführungsbeispiel als Stablampen ausgebildet sind. Eine Anordnung dieser Art ist beispielsweise in der nicht vorveröffentlichten DE 197 37 802 A oder der nicht vorveröffentlichten DE 197 54 386 A derselben Anmelderin beschrieben, so daß zur Vermeidung von Wiederholungen darauf Bezug genommen wird.

Ein weiteres Pyrometer 7 erhält über optische Leitungen oder Lichtkanäle 8 das von den Lampen 5 abgestrahlte Licht direkt zugeleitet. Um Wiederholungen hinsichtlich dieses sogenannten Lampenpyrometers 7 und der Anordnung zum Bestrahlen des Lampenpyrometers 7 mit dem Licht der Lampe 5 zu vermeiden, wird auf die nicht vorveröffentlichte DE 197 54 385 A derselben Anmelderin verwiesen.

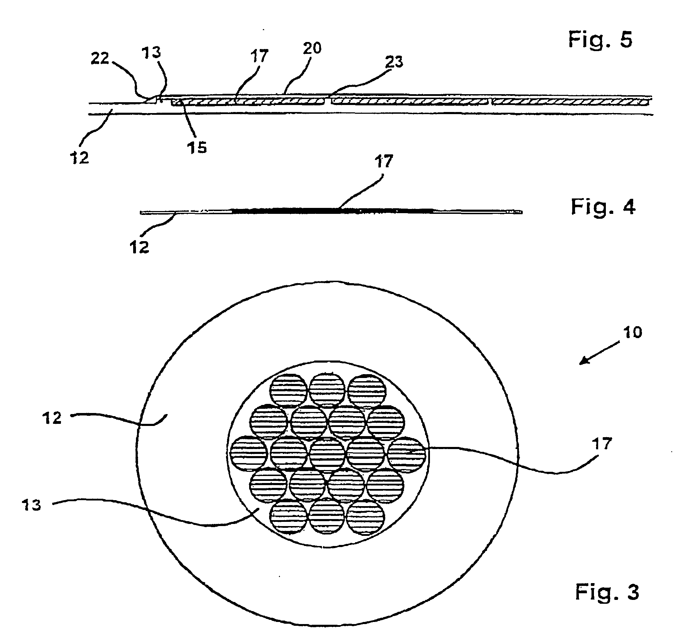

Die Figuren 3 bis 5 zeigen ein erfindungsgemäßes Referenzsubstrat in der Form eines Referenzwafers 10, der zur Kalibrierung des in den Figuren 1 und 2 dargestellten Pyrometers 6 verwendet wird. Der Referenzwafer 10 besitzt eine flache, runde Form, die im wesentlichen der eines zu behandelnden Halbleiterwafers 2 entspricht. Der Referenzwafer 10 weist einen Grundkörper 12 aus keramischem Material auf, der im Mittelbereich eine kreisförmige Erhöhung 13 aufweist. Im Bereich der Erhöhung 13 sind kreisförmige Ausnehmungen 15 zur Aufnahme eines Referenzr.aterials in der Form von Metallschmelzeinlagen 17 mit bekannter Schmelzpunkttemperatur vorgesehen. Um eine bessere Flächendeckung zu erreichen, können die Ausnehmungen auch hexagonal (wabenförmig) ausgebildet sein und über den ganzen Querschnitt des Grundkörpers 12 angeordnet sein. Um Spannungen zwischen dem Grundkörper 12 und der Metallschmelzeinlage zu vermeiden wird vor der ersten Verwendung eine Metalltablette lose in die Ausnehmung gelegt, die dann nach dem ersten Schmelzen immer mit maximal zulässigem Durchmesser erstarrt. Beim weiteren abkühlen zieht sich dann das Metall schneller zusammen als der Grundkörper. Beim wiederholten Aufheizen schmilzt dann das Metall gerade bevor mechanische Spannungen auftreten können.

Wie in Fig. 3 zu sehen ist, sind 19 kreisförmige Ausnehmungen 15 vorgesehen, in denen sich jeweils eine Metallschmelzeinlage 17 mit bekannter Schmelzpunkttemperatur befindet. Die Anzahl der Ausnehmungen 15 ist jedoch für die Erfindung unerheblich und sie kann an die Stabilitätserfordernisse des Grundkörpers 12 oder sonstige Parameter angepaßt werden. Zum Beispiel ist es möglich, nur eine Ausnehmung zur Aufnahme der Metallschmelzeinlage 17 vorzusehen, wobei darauf geachtet werden sollte, daß die Ausnehmung im Blickfeld des Pyrometers 6 liegt. Gemäß weiterer Ausführungsformen sind innerhalb der Ausnehmungen statt Metallschmelzeinlagen 17 mit gleichen, bekannten Schmelzpunkten, unterschiedliche Metallschmelzeinlagen mit unterschiedlichen Schmelzpunkten vorgesehen.

Über der Erhöhung 13 und den Metallschmelzeinlagen 17 befindet sich eine Abdeckung 20, die in ihrem Randbereich 22 mit dem Grundkörper 12 in abdichtender Weise verbunden ist. Diese Verbindung kann auf bekannte Art und Weise durch Verkleben, Verschweißen oder ein sonstiges in der Technik bekanntes Verfahren erfolgen. Zwischen der Abdekkung 20 und der Erhöhung 13 bzw. den Metallschmelzeinlagen 17 wird eine Kammer 23 gebildet, die evakuiert ist. Es ist auch denkbar statt eine Abdeckung vorzusehen, den ganzen Referenzwafer zu verglasen, bzw. eine Kombination dieser beiden Merkmale vorzusehen.

Obwohl das Referenzsubstrat anhand eines speziellen Ausführungsbeispiels beschrieben wurde, sei bemerkt, daß das Referenzsubstrat eine unterschiedliche Form und Ausgestaltung aufweisen kann, ohne daß dadurch der Erfindungsgedanke verlassen wird. Zum Beispiel könnte die Erhöhung 13 im Mittelbereich weggelassen werden, und die Ausnehmungen 15 könnten direkt im Grundkörper 12 ausgebildet sein. Statt die Metallschmelzeinlagen 17 in Ausnehmungen in dem Grundkörper 12 vorzusehen, ist es auch möglich, sie ohne Ausnehmungen flächig auf dem Grundkörper aufzubringen. Auch eine Strukturierung der dem Referenzmaterial abgewandten Oberfläche des Grundkörpers zur Erhöhung seiner Emissivität wäre denkbar.

Zur Kalibrierung des Pyrometers 6 der oben genannten Vorrichtung zur Behandlung von Halbleiterwafern wird der Referenzwafer 10 mittels einer vorhandenen, nicht näher dargestellten Handlingvorrichtung in die Reaktionskammer 1 eingebracht, und zwar in die selbe Position wie der in Fig. 1 dargestellte Halbleiterwafer 2. Nachfolgend wird die Reaktionskammer verschlossen und der Referenzwafer 10 wird mittels der Lampen 4, 5 erwärmt, wobei das Pyrometer 6 die von dem Referenzwafer 10 emittierte Strahlung sowie die daran reflektierte Strahlung der Lampe 5 mißt. Während der Erwärmung steigt in gleicher Weise die Temperatur der Metallschmelzeinlage an, bis sie ihren Schmelzpunkt erreicht. Ab diesem Zeitpunkt steigt die Temperatur der Metallschmelzeinlage nicht weiter an. Aufgrund der guten thermischen Leitfähigkeit und der dadurch schnellen Temperaturanpassung zwischen der Metallschmelzeinlage 17 und dem Referenzwafer 10 steigt auch die Temperatur des Referenzwafers 10 nicht weiter an, bis die Metallschmelzeinlage 17 komplett von der festen in die flüssige Phase übergegangen ist, d.h. bis der Metallschmelzeinlage 17 die latente Wärme zugeführt wurde. Die gleichbleibende Temperatur wird als Meßwertplateau durch das Pyrometer 6 gemessen und durch eine nicht näher dargestellte Vorrichtung mit der bekannten Schmelzpunkttemperatur in Beziehung gesetzt.

Nachdem die Metallschmelzeinlage 17 vollständig geschmolzen ist und keine latente Wärme mehr aufnimmt, steigt die Temperatur des Referenzwafers 10 weiter an. Daraufhin wird die Erwärmung gestoppt und der Referenzwafer 17 wird abgekühlt bzw. kühlt er sich ab.

Beim Abkühlen kehrt sich der Vorgang um. Die Metallschmelzeinlage 17 kühlt bis zum Erstarrungspunkt ab und deren Temperatur bleibt dann so lange im wesentlichen konstant, bis die Einlage 17 ihre latente Wärme vollständig abgegeben hat und wieder in fester Phase vorliegt. Hierdurch ergibt sich wiederum ein Meßwertplateau bei der Pyrometermessung, das mit dem bekannten Schmelzpunkt der Einlage 17 in Beziehung gesetzt werden kann.

Die Ermittlung des Meßwertplateaus während der Abkühlung ist vorteilhaft, weil die Einlage 17 im geschmolzenen Zustand einen besseren thermischen Kontakt zu dem Referenzsubstrat 10 besitzt, und daher der Temperaturausgleich zwischen Einlage 17 und Referenzsubstrat 10 schneller vonstatten geht.

Da sich die gemessene Wärmestrahlung von dem Referenz-Substrat in Abhängigkeit von der Emissivität des Substrats verändern kann, wird zum Erreichen einer Emissivitätsunabhängigkeit während des zuvor beschriebenen Vorgangs die von den Lampen 4, 5 emittierte Strahlung vorzugsweise aktiv und in einer definierten Weise moduliert, und die von den Lampen 5 emittierte Strahlung wird direkt mit dem Lampenpyrometer 7 gemessen. Die Ausgangssignale der Pyrometer 6 und 7 werden einer nicht dargestellten Auswerteschaltung zugeführt. Sie ermittelt die vom Referenzwafer 10 emittierte Strahlung, indem sie die auf das Pyromter 6 fallende Strahlung, die sich aus vom Wafer 10 emittierter und reflektierter Strahlung zusammensetzt, mit der vom Pyrometer 7 ermittelten Strahlung in Beziehung setzt. Dies ist deshalb möglich, weil die von den Lampen 5 emittierte Strahlung in einer bekannten Weise moduliert ist. Diese Modulation ist auch in der vom Pyrometer 6 aufgenommenen Strahlung enthalten, so daß durch Vergleich oder In-Beziehung-Setzen der Modulationsgrade und/oder der Modulationstiefen der von den Pyrometern 6 und 7 aufgenommenen Strahlung eine Kompensation der vom Referenzwafer 10 reflektierten Lampenstrahlung in der vom Waferpyrometer 6 aufgefangenen Strahlung möglich ist. Dadurch kann das Verhältnis zwischen der vom Wafer 10 emittierten und der reflektierten Strahlung ermittelt werden, um eine Ermittlung der Emissivität des Wafers 10 zu ermöglichen. Aufgrund der Emissivität kann nun die bekannte Schmelzpunkttemperatur der Einlage 17 mit der vom Referenzwafer 10 emittierten Strahlung in Beziehung gesetzt werden, um eine Kalibrierung bezüglich der Absoluttemperatur vorzusehen.

Eine derartige Modulation und Ermittlung der von einem Substrat emittierten Strahlung ist beispielsweise in der nicht vorveröffentlichten DE 197 54 386 A derselben Anmelderin, sowie in der US-A-5 490 728 beschrieben.

Zum Erreichen einer im wesentlichen emissivitätsunabhängigen Messung könnte anstelle der oben beschriebenen Ripple-Technik beispielsweise auch das sogenannte Cavity-Prinzip verwendet werden, bei dem durch Verwendung einer verspiegelten Kammer versucht wird, einen Hohlraumstrahler nachzuahmen.

Nachfolgend wird ein Dimensionierungsvorschlag für das Referenzsubstrat angegeben. Um ein möglichst gleichmäßiges Aufheizen des Referenzsubstrats zu gewährleisten, wird dieses bevorzugt so dimensioniert, daß die thermische Masse pro Flächeneinheit über das Substrat konstant ist. Dies kann z. B. durch die Variation der Dicke der Referenzmaterialien erreicht werden, so daß die folgende Gleichung erfüllt ist:

$$d_1 \cdot \rho_1 \cdot c_1 + d_2 \cdot \rho_2 \cdot c_2 + d_3 \cdot \rho_3 \cdot c_3 = d_4 \cdot \rho_4 \cdot c_4 \tag{1}$$

Hierbei sind $d_1$, $d_2$, $d_3$ und $d_4$ die Dicken des Referenzsubstrats an der Schmelzmetalleinlage, die Dicke des Schmelzmetalls, die Dicke der Abdeckung des Schmelzmetalls bzw. die Dicke des Referenzsubstrats in Bereichen ohne Schmelzmetalleinlage. Die zugehörigen Dichten bzw. Wäremkapazitäten sind mit $\rho_1$, $\rho_2$, $\rho_3$, $\rho_4$ bzw. $c_1$, $c_2$, $c_3$, $c_4$ bezeichnet.

Die Leistungsdichte P (Leistung/Fläche) z. B. einer RTP-Anlage und die Aufheizgeschwindigkeit R (Ramprate) kann vereinfacht mittels der folgenden Gleichung dargestellt werden:

$$d_4 \cdot \rho_4 \cdot c_4 \cdot R = P \tag{2}$$

Durch diese Beziehung wird bei einer vorgegebenen Aufheizgeschwindigkeit R die erforderliche Leistungsdichte P definiert, um das Referenzsubstrat homogen (siehe Gleichung (1)) aufzuheizen. Erreicht das Referenzmaterial seinen Schmelzpunkt, so ist zu dessen Schmelzung die (flächenbezogene) Energie $E_L$ erforderlich, die sich aus der folgenden Gleichung ergibt:

$$E_L = d_2 \cdot \rho_2 \cdot C_s \tag{3}$$

wobei $c_s$ die spezifische Schmelzwärme des Referenzmaterials ist. Wird die Leistungsdichte P des RTP-Systems unverändert beibehalten, so läßt sich die Plateauzeit $t_p$ (siehe Fig. 7) abschätzen anhand der folgenden Gleichung:

$$t_p = E_L/P \tag{4}$$

wobei $E_L$ und P aus Gleichung (2) bzw. (3) zu entnehmen sind. Dadurch läßt sich ein Plateau-Zeit-Rampratenprodukt angeben:

$$Z = t_p \cdot R = d_2 \cdot \rho_2 \cdot c_s/ d_4 \cdot \rho_4 \cdot c_4 \tag{5}$$

Dieses Produkt enthält nur die materialspezifischen Größen und die jeweiligen Schichtdicken. Damit läßt sich bei einem vorgegebenen Produkt Z mittels Gleichung (5) und Gleichung (1) bei der Wahl von z. B. $d_1$, die Dicke des

Schmelzmetalls $d_2$ und die Dicke des Referenzsubstrats $d_4$ am Randbereich berechnen. Hier ist zur Vereinfachung $d_3$ = 0 angenommen. Vorteilhaft kann jedoch auch $d_3 = d_1$ gewählt werden, insbesondere bei $c_1 = c_3$. Ist z. B. $d_1$ = 1 mm (oder $d_1 + d_3$ = 1mm bei $c_1 = c_3$), so ergeben sich für ein Referenzsubstrat aus Silizium bei einem Plateauzeit-Rampratenprodukt von 100 K für die Schmelzmetalle Germanium bzw. Aluminium Schmelzmetalldicken $d_2$ von 0,071 mm bzw. 0,2 mm, wobei der Außenbereich des Referenzsubstrats Dicken $d_4$ von 1,074 mm bzw. 1,3 mm aufweist.

$$d_4 \cdot \rho_4 \cdot c_4 \cdot R = P \qquad (2)$$

Durch diese Beziehung wird bei einer vorgegebenen Aufheizgeschwindigkeit R die erforderliche Leistungsdichte P definiert, um das Referenzsubstrat homogen (siehe Gleichung (1)) aufzuheizen. Erreicht das Referenzmaterial seinen Schmelzpunkt, so ist zu dessen Schmelzung die (flächenbezogene) Energie $E_L$ erforderlich, die sich aus der folgenden Gleichung ergibt:

$$E_L = d_2 \cdot \rho_2 \cdot C_s \qquad (3)$$

wobei $c_s$ die spezifische Schmelzwärme des Referenzmaterials ist. Wird die Leistungsdichte P des RTP-Systems unverändert beibehalten, so läßt sich die Plateauzeit $t_p$ (siehe Fig. 7) abschätzen anhand der folgenden Gleichung:

$$t_p = E_L/P \qquad (4)$$

wobei $E_L$ und P aus Gleichung (2) bzw. (3) zu entnehmen sind. Dadurch läßt sich ein Plateau-Zeit-Rampratenprodukt angeben:

$$Z = t_p \cdot R = d_2 \cdot \rho_2 \cdot c_s/(d_4 \cdot \rho_4 \cdot c_4) \qquad (5)$$

Dieses Produkt enthält nur die materialspezifischen Größen und die jeweiligen Schichtdicken. Damit läßt sich bei einem vorgegebenen Produkt Z mittels Gleichung (5) und Gleichung (1) bei der Wahl von z. B. $d_1$, die Dicke des Schmelzmetalls $d_2$ und die Dicke des Referenzsubstrats $d_4$ am Randbereich berechnen. Hier ist zur Vereinfachung $d_3$ = 0 angenommen. Vorteilhaft kann jedoch auch $d_3 = d_1$ gewählt werden, insbesondere bei $c_1 = c_3$.

**Patentansprüche**

**1.** Verfahren zum Kalibrieren von Temperaturmessungen, die mit wenigstens einem ersten Strahlungsdetektor (6) zum Messen einer von wenigstens einem Substrat (2) abgegebenen Wärmestrahlung vorgenommen werden, **gekennzeichnet durch** folgende Verfahrensschritte:

Erwärmen eines wenigstens ein Referenzmaterial (17) mit bekannter Schmelzpunkttemperatur tragenden Referenzsubstrats (10) auf und/oder über die Schmelzpunkttemperatur; Messen der Wärmestrahlung des Referenzsubstrats (10) während der Erwärmung und/oder einer der Erwärmung folgenden Abkühlung; und In-Beziehung-Setzen eines während des Messvorgangs auftretenden Messwertplateaus mit der bekannten Schmelzpunkttemperatur.

**2.** Verfahren nach Anspruch 1, **dadurch gekennzeichnet, daß** zur Erwärmung des Referenzsubstrats (10) wenigstens eine Strahlungsquelle (4,5) verwendet wird.

**3.** Verfahren nach Anspruch 2, **dadurch gekennzeichnet, daß** die von der wenigstens einen Strahlungsquelle (5) abgegebene Strahlung mit wenigstens einem zweiten Strahlungsdetektor (7) ermittelt wird, daß die von der wenigstens einen Strahlungsquelle (5) abgegebene Strahlung mit wenigstens einem charakteristischen Parameter moduliert wird, und daß die von dem ersten Strahlungsdetektor (6) ermittelte Strahlung zum Kompensieren der von dem Referenzsubstrat reflektierten Strahlung der Strahlungsquelle (5) durch die von dem zweiten Strahlungsdetektor (7) ermittelte Strahlung korrigiert wird.

**4.** Verfahren nach Anspruch 3, **dadurch gekennzeichnet, daß** die Modulation zur Charakterisierung der von der Strahlungsquelle (5) abgegebenen Strahlung, bei der Korrektur der vom ersten Strahlungsdetektor (6) ermittelten Strahlung herangezogen wird.

**5.** Verfahren nach Anspruch 3 oder 4, **dadurch gekennzeichnet, daß** die von der Strahlungsquelle (5) abgegebene Strahlung amplituden-, frequenz- und/oder phasenmoduliert wird.

**6.** Verfahren nach einem der Ansprüche 2 bis 5, **dadurch gekennzeichnet, daß** die Strahlungsquelle (5) durch mehrere Lampen gebildet wird, und daß die Strahlung von wenigstens einer der Lampen moduliert wird.

**7.** Verfahren nach einem der Ansprüche 3 bis 6, **dadurch gekennzeichnet, daß** der Modulationsgrad oder die Modulationstiefe der Strahlung gesteuert wird.

**8.** Verfahren nach Anspruch 1 oder 2, **dadurch gekennzeichnet, daß** die Messung der vom Referenzsubstrat (10) abgegebenen Wärmestrahlung auf der Seite des Referenzsubstrats (10) vorgenommen wird, die zu einem Hohlraumstrahler weist.

**9.** Verfahren nach einem der vorhergehenden Ansprüche, **dadurch gekennzeichnet, daß** mehrere Referenzmaterialien (17) mit jeweils unterschiedlichen Schmelzpunkttemperaturen auf dem Referenzsubstrat (10) vorgesehen sind, und daß die jeweiligen während der Erwärmung und/oder Abkühlung ermittelte Messwertplateaus jeweils mit einer der bekannten Schmelzpunkttemperaturen in Beziehung gesetzt werden.

**10.** Verfahren nach einem der vorhergehenden Ansprüche, **dadurch gekennzeichnet, daß** das Referenzsubstrat zur Kalibrierung einer Vorrichtung zum thermischen Behandeln von Substraten in diese eingebracht wird.

**11.** Vorrichtung zum Kalibrieren von im wesentlichen emissivitätsunabhängigen Temperaturmessungen, die mit wenigstens einem ersten Strahlungsdetektor (6) zum Messen der von wenigstens einem Substrat (2) emittierten Wärmestrahlung vorgenommen werden, **gekennzeichnet durch** wenigstens ein Referenzmaterial (17) mit bekannter Schmelzpunkttemperatur, das an einem Referenzsubstrat (10) angebracht ist, wobei das Referenzmaterial wenigstens 1% der Masse des Referenzsubstrats beträgt;
wenigstens eine Strahlungsquelle (4,5) zum Erwärmen des Referenzsubstrats (10) auf eine Temperatur auf und/oder über die Schmelzpunkttemperatur des Substrats;
eine Vorrichtung zum In-Beziehung-Setzen eines während der Erwärmung des Substrats am ersten Strahlungsdetektor auftretenden Messwertplateaus mit der bekannten Schmelzpunkttemperatur.

**12.** Vorrichtung nach Anspruch 11, **gekennzeichnet durch** wenigstens einen zweiten Strahlungsdetektor (7) zur Messung der von der wenigstens einen Strahlungsquelle (5) abgegebenen Strahlung;
eine Modulationseinrichtung zur Modulation der von der wenigstens einen Strahlungsquelle (5) abgegebenen Strahlung mit wenigstens einem charakteristischen Parameter; und eine Einrichtung zum Korrigieren der vom ersten Strahlungsdetektor (6) ermittelten Strahlung anhand der vom zweiten Strahlungsdetektor (7) ermittelten Strahlung.

**13.** Vorrichtung nach Anspruch 12, **dadurch gekennzeichnet** das die Strahlungsquelle (4,5) durch mehrere Lampen gebildet wird, und daß die Strahlung wenigstens einer der Lampen modulierbar ist.

**14.** Vorrichtung nach einem der Ansprüche 12 oder 13, **dadurch gekennzeichnet, daß** der Modulationsgrad oder die Modulationstiefe der von der Strahlungsquelle (4,5) abgegebenen Strahlung steuerbar ist.

**15.** Vorrichtung nach einem der Ansprüche 11 bis 14, **gekennzeichnet durch** einen Hohlraumstrahler, der wenigstens teilweise **durch** das Substrat gebildet ist.

**16.** Vorrichtung nach Anspruch 15, **dadurch gekennzeichnet, daß** der Hohlraumstrahler durch eine verspiegelte Kammer gebildet wird, bei der wenigstens ein Wandbereich durch das Substrat gebildet wird.

**17.** Vorrichtung nach Anspruch 15, **dadurch gekennzeichnet, daß** der Hohlraumstrahler in einem Zwischenraum zwischen dem Substrat und einer parallel dazu angeordneten Platte gebildet wird.

**18.** Vorrichtung nach einem der Ansprüche 11 bis 17, **gekennzeichnet durch** eine über dem Referenzmaterial (17) befindliche Abdeckung (20) am Referenzsubstrat (10).

**19.** Vorrichtung nach Anspruch 18, **gekennzeichnet durch** eine zwischen der Abdeckung (20) und dem Referenzsubstrat (10) definierte Kammer (23).

**20.** Vorrichtung nach Anspruch 19, **dadurch gekennzeichnet, daß** die Kammer (23) gegenüber der Umgebung abgedichtet ist.

**21.** Vorrichtung nach einem der Ansprüche 19 oder 20, **dadurch gekennzeichnet, daß** die Kammer (23) evakuiert ist.

**22.** Vorrichtung nach einem der Ansprüche 11 bis 21, **dadurch gekennzeichnet, daß** das Referenzsubstrat (10) verglast ist.

**23.** Vorrichtung nach einem der Ansprüche 11 bis 22, **dadurch gekennzeichnet, daß** das Referenzsubstrat (10) wenigstens eine Vertiefung (15) zur Aufnahme des wenigstens einen Referenzmaterials (17) aufweist.

**24.** Vorrichtung nach Anspruch 23, **dadurch gekennzeichnet, daß** die Wände der Vertiefungen (15) abgeschrägt sind.

**25.** Vorrichtung nach einem der Ansprüche 11 bis 24, **dadurch gekennzeichnet, daß** das Referenzsubstrat (10) die gleiche Größe und/oder Form und/oder das gleiche Gewicht besitzt, wie das Substrat (2), dessen Temperatur nach der Kalibrierung gemessen werden soll.

**26.** Vorrichtung nach einem der Ansprüche 11 bis 25, **dadurch gekennzeichnet, daß** das wenigstens eine Referenzmaterial (17) ein Metall, insbesondere ein hochreines Metall, ist.

**27.** Vorrichtung nach einem der Ansprüche 11 bis 26, **dadurch gekennzeichnet, daß** am Referenzsubstrat (10) unterschiedliche Referenzmaterialien (17) mit unterschiedlichen Schmelzpunkttemperaturen vorgesehen sind.

**28.** Vorrichtung nach einem der Ansprüche 11 bis 27, **dadurch gekennzeichnet, daß** wenigstens ein Referenzmaterial (17) an unterschiedlichen Stellen auf dem Referenzsubstrat (10) angeordnet ist.

**29.** Vorrichtung nach einem der Ansprüche 11 bis 28, **dadurch gekennzeichnet, daß** wenigstens ein Referenzmaterial (17) auf einer dem ersten Strahlungsdetektor (6) abgewandten Seite des Referenzsubstrats (10) angebracht ist.

**30.** Vorrichtung nach einem der Ansprüche 11 bis 29, **dadurch gekennzeichnet, daß** eine dem ersten Strahlungsdetektor (6) zugewandte Seite des Referenzsubstrats (10) Strukturen, insbesondere Mikrokanäle, aufweist.

**31.** Vorrichtung nach einem der Ansprüche 11 bis 30, **gekennzeichnet durch** eine Vielzahl von Referenzsubstraten (10) mit jeweils unterschiedlichen optischen Schichten.

**32.** Vorrichtung nach einem der Ansprüche 11 bis 31, **dadurch gekennzeichnet, daß** das Referenzsubstrat (10) aus einem keramischen Werkstoff gefertigt ist.

**33.** Vorrichtung nach einem der Ansprüche 11 bis 32, **dadurch gekennzeichnet**, das die Vorrichtung zur Kalibrierung einer Vorrichtung zur schnellen thermischen Behandlung von Substraten in einem Ofen, geeignet ist.

**34.** Referenzsubstrat zur Temperatur-Kalibration nach dem Verfahren von einem der Ansprüche 1 bis 10 mit wenigstens einem Referenzmaterial bekannter Schmelzpunkttemperatur, das im Inneren des Referenzsubstrats angeordnet ist, wobei das Referenzmaterial wenigstens 1% der Masse des Referenzsubstrats beträgt.

**35.** Referenzsubstrat nach Anspruch 34, **dadurch gekennzeichnet, daß** das Referenzmaterial durch ein Substratmaterial der Dicke von wenigstens drei optischen Abschwächungslängen einer ausgewählten Wellenlänge umgeben ist.

**36.** Referenzsubstrat nach Anspruch 35, **dadurch gekennzeichnet, daß** die Dicke wenigstens 3µm beträgt.

**37.** Referenzsubstrat nach einem der Ansprüche 34 bis 36, **dadurch gekennzeichnet, daß** die thermische Masse pro Flächeneinheit über das Substrat hinweg konstant ist.

**Claims**

1. Method for calibrating temperature measurements which are undertaken by at least one radiation detector (6) for the measurement of a heat radiation delivered by at least one substrate (2), **characterised by** the following method steps:

   heating a reference substrate (10), which carries at least one reference material (17) with a known melting point temperature, to and/or beyond the melting point temperature;
   measuring the heat radiation of the reference substrate (10) during the heating and/or a cooling following the heating; and
   correlating a measurement value plateau, which occurs during the measuring process, with the known melting point temperature.

2. Method according to claim 1, **characterised in that** at least one radiation source (4, 5) is used for heating the reference substrate (10).

3. Method according to claim 2, **characterised in that** the radiation delivered by the at least one radiation source (5) is ascertained by at least one second radiation detector (7), that the radiation delivered by the at least one radiation source (5) is modulated by at least one characteristic parameter and that the radiation ascertained by the first radiation detector (6) is, for compensation for the radiation, which is reflected by the reference substrate, of the radiation source (5), corrected by the radiation ascertained by the second radiation detector (7).

4. Method according to claim 3, **characterised in that** the modulation for characterisation of the radiation delivered by the radiation source (5) is utilised in the correction of the radiation ascertained by the first radiation detector (6).

5. Method according to claim 3 or 4, **characterised in that** the radiation delivered by the radiation source (5) is modulated in amplitude, frequency and/or phase.

6. Method according to one of claims 2 to 5, **characterised in that** the radiation source (5) is formed by several lamps and that the radiation of at least one of the lamps is modulated.

7. Method according to one of claims 3 to 6, **characterised in that** the degree of modulation or the depth of modulation of the radiation is controlled.

8. Method according to claim 1 or 2, **characterised in that** the measurement of the heat radiation delivered by the reference substrate (10) is carried out on that side of the reference substrate (10) which faces towards a cavity radiator.

9. Method according to one of the preceding claims, **characterised in that** several reference materials (17) with respectively different melting point temperatures are provided on the reference substrate (10) and that the respective measurement value plateaux ascertained during the heating and/or cooling are respectively correlated with one of the known melting point temperatures.

10. Method according to one of the preceding claims, **characterised in that** the reference substrate for calibrating a device for thermal treatment of substrates is mounted in this.

11. Device for calibrating temperature measurements which are substantially independent of emissivity and which are carried out by at least one first radiation detector (6) for measuring the heat radiation emitted by at least one substrate (2), **characterised by** at least one reference material (17) with a known melting point temperature, which is mounted at a reference substrate (10), wherein the reference material amounts to at least 1% of the mass of the reference substrate; at least one radiation source (4, 5) for heating the reference substrate (10) to a temperature to and/or beyond the melting point temperature of the substrate; and a device for correlating a measurement value plateau, which arises at the first radiation detector during the heating of the substrate, with the known melting point temperature.

12. Device according to claim 11, **characterised by** at least one second radiation detector (7) for measuring the radiation delivered by the at least one radiation source (5); a modulation device for modulation of the radiation, which is delivered by the at least one radiation source (5), with at least one characteristic parameter; and a device for correcting the radiation, which is ascertained by the first radiation detector (6), by way of the radiation ascertained by the second radiation detector (7).

13. Device according to claim 12, **characterised in that** the radiation source (4, 5) is formed by several lamps and that the radiation can be modulated by at least one of the lamps.

14. Device according to one of claims 12 and 13, **characterised in that** the degree of modulation or the depth of modulation of the radiation delivered by the radiation source (4, 5) is controllable.

15. Device according to one of claims 11 to 14, **characterised by** a cavity radiator which is formed at least partly by the substrate.

16. Device according to claim 15, **characterised in that** the cavity radiator is formed by a reflective chamber in which at least one wall region is formed by the substrate.

17. Device according to claim 15, **characterised in that** the cavity radiator is formed in an intermediate space between the substrate and a plate arranged parallel thereto.

18. Device according to one of claims 11 to 17, **characterised by** a cover (20), which is disposed over the reference material (17), at the reference substrate (10).

19. Device according to claim 18, **characterised by** a chamber (23) defined between the cover (20) and the reference substrate (10).

20. Device according to claim 19, **characterised in that** the chamber (23) is sealed relative to the environment.

21. Device according to one of claims 19 and 20, **characterised in that** the chamber (23) is evacuated.

22. Device according to one of claims 11 to 21, **characterised in that** the reference substrate (10) is glazed.

23. Device according to one of claims 11 to 22, **characterised in that** the reference substrate (10) has at least one recess (15) for reception of the at least one reference material.(17).

24. Device according to claim 23, **characterised in that** the walls of the recesses (15) are inclined.

25. Device according to one of claims 11 to 24, **characterised in that** the reference substrate (10) has the same size and/or shape and/or weight as the substrate (2), the temperature of which is to be measured after the calibration.

26. Device according to one of claims 11 to 25, **characterised in that** the at least one reference material (17) is a metal, especially a highly pure metal.

27. Device according to one of claims 11 to 26, **characterised in that** different reference materials (17) with different melting point temperatures are provided at the reference substrate (10).

28. Device according to one of claims 11 to 27, **characterised in that** at least one reference material (17) is arranged at different places on the reference substrate (10).

29. Device according to one of claims 11 to 28, **characterised in that** at least one reference material (17) is applied to a side, which is remote from the first radiation detector (6), of the reference substrate (10).

30. Device according to one of claims 11 to 29, **characterised in that** a side, which faces the first radiation detector (6), of the reference substrate (10) has structures, especially micro-channels.

31. Device according to one of claims 11 to 30, **characterised by** a plurality of reference substrates (10) with respectively different optical layers.

32. Device according to one of claims 11 to 31, **characterised in that** the reference substrate (10) is made of a ceramic material.

**33.** Device according to one of claims 11 to 32, **characterised in that** the device is suitable for calibrating a device for rapid thermal treatment of substrates in an oven.

**34.** Reference substrate for temperature calibration according to the method of one of claims 1 to 10 with at least one reference material of known melting point temperature, which is arranged in the interior of the reference substrate, wherein the reference material amounts to at least 1% of the mass of the reference substrate.

**35.** Reference substrate according to claim 34, **characterised in that** the reference material is enclosed by a substrate material of the thickness of at least three optical attenuation lengths of a selected wavelength.

**36.** Reference substrate according to claim 35, **characterised in that** the thickness amounts to at least 3 μm.

**37.** Reference substrate according to one of claims 34 to 36, **characterised in that** the thermal mass per unit of area is constant over the substrate.

**Revendications**

**1.** Procédé pour le calibrage de mesures de températures qui sont effectuées avec au moins un premier détecteur de rayonnement (6) pour mesurer un rayonnement de chaleur émis par au moins un substrat (2) **caractérisé par** les étapes de procédé suivantes:

échauffement d'un substrat de référence (10) portant au moins un matériau de référence (17) d'une température de point de fusion connue à et/ou au-dessus de la température du point de fusion; mesure du rayonnement thermique du substrat de référence (10) pendant l'échauffement et/ou un refroidissement faisant suite à l'échauffement; et
mise en rapport d'un plateau de valeurs de mesure produit pendant l'opération de mesure avec la température de point de fusion connue.

**2.** Procédé selon la revendication 1, **caractérisé en ce que** pour l'échauffement du substrat de référence (10), au moins une source de rayonnement (4,5) est utilisée.

**3.** Procédé selon la revendication 2, **caractérisé en ce que** le rayonnement émis par au moins une source de rayonnement précité (5) est déterminé par au moins un deuxième détecteur de rayonnement (7), **en ce que** le rayonnement émis par au moins une source de rayonnement précité (5) est modulé avec au moins un paramètre caractéristique, et **en ce que** le rayonnement déterminé par le premier détecteur de rayonnement (6), pour la compensation du rayonnement de la source de rayonnement (5) réfléchie par le substrat de référence, est corrigé par le rayonnement déterminé par le deuxième détecteur de rayonnement (7).

**4.** Procédé selon la revendication 3, **caractérisé en ce que** la modulation est utilisée pour la caractérisation du rayonnement émis par la source de rayonnement (5), lors de la correction du rayonnement déterminé par le premier détecteur de rayonnement (6).

**5.** Procédé selon la revendication 3 ou 4, **caractérisé en ce que** le rayonnement émis par la source de rayonnement (5) est modulé en amplitude, en fréquence et/ou en phase.

**6.** Procédé selon les revendications 2 à 5, **caractérisé en ce que** la source de rayonnement (5) est constituée par plusieurs lampes, et **en ce que** le rayonnement d'au moins une des lampes est modulé.

**7.** Procédé selon l'une des revendications 3 à 6, **caractérisé en ce que** le degré de modulation ou la profondeur de modulation du rayonnement est commandé.

**8.** Procédé selon la revendication 1 ou 2, **caractérisé en, ce que** la mesure du rayonnement thermique émis par le substrat de référence (10) est effectuée au côté du substrat de référence (10) qui est orienté vers un radiateur du corps noir.

**9.** Procédé selon l'une des revendications précédentes, **caractérisé en ce que** plusieurs matériaux de référence (17) ayant des températures de point de fusion respectivement différentes sont prévus sur le substrat de référence (10), et **en ce que** les plateaux de valeurs de mesure respectifs obtenus lors de l'échauffement et/ou du refroidissement sont mis en rapport respectivement avec l'une des températures des points de fusion connues.

10. Procédé selon l'une des revendications précédentes, **caractérisé en ce que** le substrat de référence, pour le calibrage d'un dispositif pour le traitement thermique de substrats, est introduit dans celui-ci.

11. Dispositif pour le calibrage de mesures de température sensiblement indépendantes du pouvoir émissif relatif, qui sont effectuées avec au moins un premier détecteur de rayonnement 6 pour mesurer le rayonnement thermique émis par au moins un substrat (2), **caractérisé par** au moins un matériau de référence (17) d'une température de point de fusion connue qui est disposé à un substrat de référence (10), où le matériau de référence représente au moins 1% de la masse du substrat de référence;
au moins une source de rayonnement (4,5) pour l'échauffement du substrat de référence (10) à une température à et/ou au-dessus de la température du point de fusion du substrat;
un dispositif pour la mise en rapport d'un plateau de valeurs de mesure produit pendant l'échauffement du substrat au premier détecteur de rayonnement avec la température de point de fusion connue.

12. Dispositif selon la revendication 11, **caractérisé par** au moins un deuxième détecteur de rayonnement (7) pour la mesure du rayonnement émis par au moins une source de rayonnement précitée (5);
une installation de modulation pour la modulation du rayonnement émis par au moins une source de rayonnement précitée (5), avec au moins un paramètre caractéristique et,
une installation pour la correction du rayonnement détecté par le premier détecteur de rayonnement (6) à l'aide du rayonnement détecté par le deuxième détecteur de rayonnement (7).

13. Dispositif selon la revendication 12, **caractérisé en ce que** la source de rayonnement (4,5) est formée par plusieurs lampes, et **en ce que** le rayonnement d'au moins une des lampes est modulable.

14. Dispositif selon l'une des revendications 12 ou 13, **caractérisé en ce que** le degré de modulation ou la profondeur de modulation du rayonnement émis par la source de rayonnement (4,5) peut être commandé.

15. Dispositif selon l'une des revendications 11 à 14, **caractérisé par** un radiateur du corps noir qui est formé au moins partiellement par le substrat.

16. Dispositif selon la revendication 15, **caractérisé en ce que** le radiateur du corps noir est formé par une chambre métallisée où au moins une zone de paroi est formée par le substrat.

17. Dispositif selon la revendication 15, **caractérisé en ce que** le radiateur du corps noir est formé dans un espace intermédiaire entre le substrat et une plaque disposée parallèlement à celui-ci.

18. Dispositif selon l'une des revendications 11 à 17, **caractérisé par** un recouvrement (20) se trouvant au-dessus du matériau de référence (17), au substrat de référence (10).

19. Dispositif selon la revendication 18, **caractérisé par** une chambre (23) définie entre le recouvrement (20) et le substrat de référence (10).

20. Dispositif selon la revendication 19, **caractérisé en ce que** la chambre (23) est rendue étanche par rapport à l'environnement.

21. Dispositif selon l'une des revendications 19 ou 20, **caractérisé en ce que** la chambre (23) est évacuée.

22. Dispositif selon l'une des revendications 11 à 21, **caractérisé en ce que** le substrat de référence (10) est vitrifié.

23. Dispositif selon l'une des revendications 11 à 22, **caractérisé en ce que** le substrat de référence (10) présente au moins un creux (15) pour la réception d'au moins un matériau de référence précitée (17).

24. Dispositif selon la revendication 23, **caractérisé en ce que** les parois des creux (15) sont chanfreinées.

25. Dispositif selon l'une des revendications 11 à 24, **caractérisé en ce que** le substrat de référence (10) a la même grandeur et/ou forme et/ou le même poids que le substrat (2) dont la température doit être mesurée après le calibrage.

**26.** Dispositif selon l'une des revendications 11 à 25, **caractérisé en ce qu'**au moins un matériau de référence précité (17) est un métal, notamment un métal de grande pureté.

**27.** Dispositif selon l'une des revendications 11 à 26, **caractérisé en ce que** sont prévus au substrat de référence (10) des matériaux de référence différents (17) ayant des températures de point de fusion différentes.

**28.** Dispositif selon l'une des revendications 11 à 27, **caractérisé en ce qu'**au moins un matériau de référence précité (17) est disposé à des emplacements différents sur le substrat de référence (10).

**29.** Dispositif selon l'une des revendications 11 à 28, **caractérisé en ce qu'**au moins un matériau de référence (17) est disposé au côté du substrat de référence (10) éloigné du premier détecteur de rayonnement (6).

**30.** Dispositif selon l'une des revendications 11 à 29, **caractérisé en ce qu'**un côté du substrat de référence (10) orienté vers le premier détecteur de rayonnement (6) présente des structures, notamment des micro-canaux.

**31.** Dispositif selon l'une des revendications 11 à 30, **caractérisé par** une pluralité de substrats de référence (10) avec des couches optiques respectivement différentes.

**32.** Dispositif selon l'une des revendications 11 à 31, **caractérisé en ce que** le substrat de référence (10) est fabriqué en un matériau céramique.

**33.** Dispositif selon l'une des revendications 11 à 32, **caractérisé en ce que** le dispositif convient pour le calibrage d'un dispositif pour le traitement thermique rapide de substrats dans un four.

**34.** Substrat de référence pour le calibrage de température selon le procédé d'une des revendications 1 à 10, avec au moins un matériau de référence d'une température de point de fusion connue, qui est disposé à l'intérieur du substrat de référence, où le matériau de référence représente au moins 1% de la masse du substrat de référence.

**35.** Substrat de référence selon la revendication 34, **caractérisé en ce que** le matériau de référence est entouré par un matériau de substrat de l'épaisseur d'au moins trois longueurs d'affaiblissement optiques d'une longueur d'onde sélectionnée.

**36.** Substrat de référence selon la revendication 35, **caractérisé en ce que** l'épaisseur est d'au moins 3μm.

**37.** Substrat de référence selon l'une des revendications 34 à 36, **caractérisé en ce que** la masse thermique par unité de surface est constante sur le substrat.

Fig. 1

EP 1 101 085 B1

Fig. 2

Fig. 5

Fig. 4

Fig. 3

**Fig. 6**

Pyrometersignal I

$\Delta I$

$T_{m1}$

Zeit t

**Fig. 7**

Strahlungsdetektorsignal I

$I_n$

$t_p$

Zeit t

**Fig. 8**

12

⊙TC1    ⊙TC2

⊙TC3    ⊙TC4